# EUROPEAN PATENT APPLICATION

(11) **EP 4 174 756 A1**
(43) Date of publication of application: **03.05.2023**
(21) Application number: 21860807.3
(22) Date of filing: 22.02.2021
(51) Int. Cl.: G06Q 50/30

(54) **OPERATION COOPERATION DEVICE AND OPERATION COOPERATION ASSISTANCE METHOD**

(30) Priority: 25.08.2020 JP 2020141697
(71) Applicant: Hitachi, Ltd., Tokyo 100-8280 (JP)
(72) Inventor: MOCHIZUKI, Tomoyuki, Tokyo 100-8280 (JP); TOMIYAMA, Tomoe, Tokyo 100-8280 (JP); YONEHARA, Miki, Tokyo 100-8280 (JP); MINAKAWA, Tsuyoshi, Tokyo 100-8280 (JP)
(74) Representative: Manitz Finsterwald Patent- und Rechtsanwaltspartnerschaft mbB
(86) International application number: PCT/JP2021/006515
(87) International publication number: WO 2022/044375

(57) **Abstract**

Transportation service quality in the entire region is improved without assuming integration of transportation operators. An operation coordination apparatus 1 includes an operation policy estimation section 23 or 25 and a transportation means adjustment section 24. The operation policy estimation section 23 or 25 estimates, for each of a plurality of transportation operators, an operation policy thereof on the basis of operation history information 131 or 151 of transportation means provided by each of the transportation operators. The transportation means adjustment section 24 adjusts, when it is forecast that a first travel demand that uses the transportation means of the first transportation operator will exceed first transportable passengers of the transportation means of the first transportation operator, operations of the respective pieces of transportation means of the plurality of transportation operators in such a manner as to absorb the first travel demand that exceeds the first transportable passengers on the basis of the operation policy estimated for each of the plurality of transportation operators and proposes the adjusted operations of the respective pieces of transportation means to the transportation operators.

## Description

### Technical Field

The present invention relates to an operation coordination apparatus and an operation coordination support method for supporting coordination of operations among pieces of transportation means provided by a plurality of transportation operators.

### Background Art

MaaS (Mobility as a Service) is drawing attention as a future image of a sustainable transportation society. MaaS provides transportation means not only as goods but also as services. At present, transportation agencies such as railroads, buses, and taxis are operated by their respective pieces of transportation operators, and users select routes according to their destinations or traffic conditions, reserve transportation agencies as necessary, and individually make payments to the transportation operators of the transportation agencies they used. MaaS enables seamless use of the plurality of these transportation agencies. By using a MaaS app, the users can make route searches, reservations, and payments all at once and select transportation means and a travel pattern that fit their own preferences. It is expected that MaaS will integrate not only the above transportation agencies and rental cars but also new transportation services such as sharing services that have been rapidly expanding in recent years to support travel of the users as a single mobility service.

Patent Document 1 discloses a navigation apparatus that enables display and selection of results close to a user's desire by searching for a plurality of transfer routes with a low degree of congestion once.

Patent Document 2 discloses an operation system for a transportation agency that can develop a train/vehicle operation plan to fit customers' needs, select a train/vehicle type on the basis of a customer count, and add extra departures in order to improve both train/vehicle operation efficiency and customer satisfaction.

### Prior Art Document

### Patent Document

Patent Document 1: JP-2013-19774-A
Patent Document 2: JP-2002-269671-A

### Summary of Invention

### Problem to be Solved by the Invention

The word "MaaS" covers various degrees of integration of its mobility services and provided functions. For example, an example of definition of classifying MaaS into five levels is known. According to the example of definition, there is no integration at level 0 (non-MaaS), information is integrated at level 1, reservations and payments are integrated at level 2, services provided are integrated at level 3, and objectives of the whole society are integrated at level 4. At level 4, emphasis is placed on socio-strategic objectives with the aim of going beyond traffic policy and optimizing an entire city.

In order to make MaaS effective, transportation operators are demanded to achieve integration by cooperating with each other in various aspects of information and business activities. To achieve the demand, considerable integration costs and change of awareness are required. Meanwhile, in order to overcome such difficulties and cause new services to take root in society, it is important for transportation operators and transportation users to be able to realize visible improvement in travel convenience resulting from the integration of transportation means.

The inventor et al. studied quick improvement of the quality of transportation services in a region by using big data without assuming integration of or close coordination among transportation operators. That is, before MaaS is provided, the transportation operators run their transportation agencies according to their own operation policies and KPIs. Under such circumstances, the operation coordination system of the present invention grasps passenger demands and operation statuses of the plurality of pieces of transportation means and proposes operations that have been adjusted in line with estimated operation policies. Accordingly, it is an object to take the lead in improving the quality of the transportation services equivalent to the MaaS level 4 in the region.

Patent Document 1 simply provides a plurality of options to users and does not request transportation operators to change their operations. Patent Document 2 changes the operation for a single transportation operator and does not coordinate operations of the plurality of transportation operators.

### Means for Solving the Problem

An operation coordination apparatus which is an embodiment of the present invention is an operation coordination apparatus for supporting, in a region where a plurality of transportation operators including a first transportation operator provide different pieces of transportation means, coordination of operations among the respective pieces of transportation means provided by the plurality of transportation operators, the operation coordination apparatus including an operation policy estimation section adapted to estimate, for each of the plurality of transportation operators, an operation policy thereof on the basis of operation history information of the transportation means provided by each of the transportation operators, and a transportation means adjustment section adapted to adjust, when it is forecast that a first travel demand that uses the transportation means of the first transportation operator will exceed first transportable passengers of the transportation means of the first transportation operator, operations of the respective pieces of transportation means of the plurality of transportation operators in such a manner as to absorb the first travel demand that exceeds the first transportable passengers on the basis of the operation policy estimated for each of the plurality of transportation operators and propose the adjusted operations of the respective pieces of transportation means to the transportation operators.

### Advantageous of the Invention

Transportation service quality in an entire region is improved without assuming integration of transportation operators.

Other problems and new features will become apparent from the description of the present specification and attached drawings.

### Brief Description of Drawings

FIG. 1 is a block diagram of an operation coordination system.
FIG. 2 is a functional block diagram of an operation coordination apparatus.
FIG. 3A is a diagram illustrating a traffic condition in a first working example.
FIG. 3B is a diagram illustrating a capacity of each transportation means.
FIG. 4 is a diagram illustrating a data structure of operation history data 131.
FIG. 5 is a diagram illustrating a data structure of an extra departure tendency information table 132.
FIG. 6 is a flowchart of an operation coordination adjustment flow.
FIG. 7 is a diagram illustrating a data structure of demand information data 111.
FIG. 8A is a diagram illustrating a data structure of operation plan data 121a.
FIG. 8B is a diagram illustrating a data structure of position information data 122.
FIG. 9 is a diagram illustrating a data structure of supply information data 123.
FIG. 10A is a diagram illustrating a data structure of post-adjustment supply information data 141a.
FIG. 10B is a diagram illustrating a data structure of post-adjustment supply information data 141b.
FIG. 10C is a diagram illustrating a data structure of post-adjustment supply information data 141c.
FIG. 11 is an example of a recommendation delivered to transportation operators.
FIG. 12 is a diagram illustrating a traffic condition in a second working example.
FIG. 13 is a diagram illustrating a data structure of operation plan data 121b.
FIG. 14 is a diagram illustrating a data structure of operation performance data 151.
FIG. 15 is a data structure of a recovery policy information table 152.

### Modes for Carrying Out the Invention

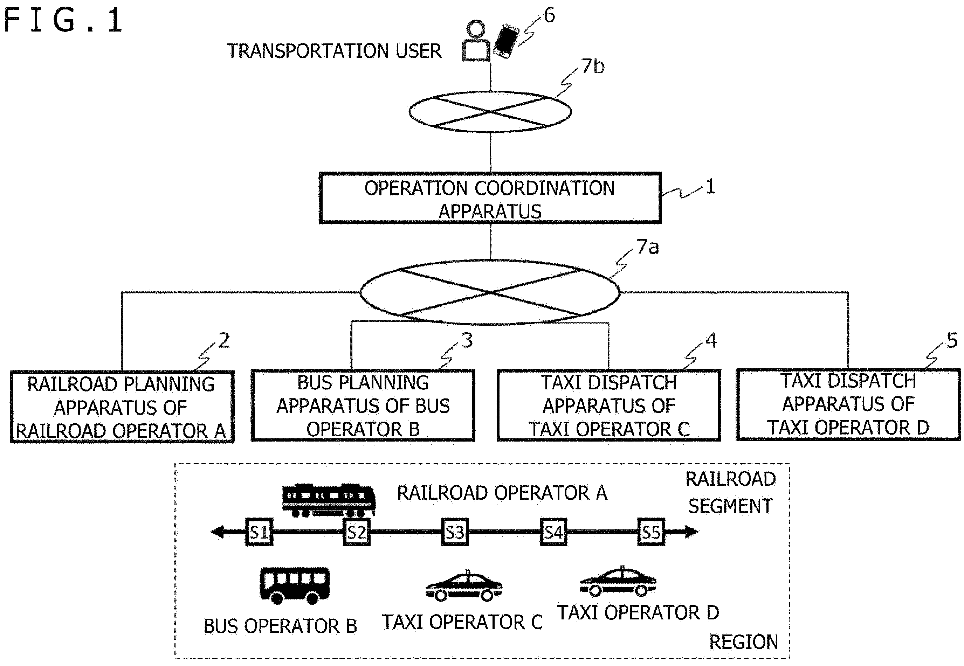

FIG. 1 is a block diagram illustrating an image of an operation coordination system as a whole. The present invention will be described below with reference to an example of performing operation coordination support in a region where a railroad operator A has a railroad line, a bus operator B has a bus line, and taxi operators C and D are running their businesses as transportation operators. Although there are no specific limitations on transportation operators that participate in the operation coordination system, it is desirable that as many transportation operators in the region targeted for improved quality of transportation services as possible participate.

In order to support coordination of operations among transportation agencies owned by these transportation operators and improve the quality of transportation services in the region, a coordination supporter puts an operation coordination apparatus 1 in place. Here, it is assumed that the coordination supporter performs coordination support without having any interest in any one of the transportation operators that participate and by using publicly disclosed information. The operation coordination apparatus 1 is connected with a railroad planning apparatus 2 of the railroad operator A, a bus planning apparatus 3 of the bus operator B, a taxi dispatch apparatus 4 of the taxi operator C, and a taxi dispatch apparatus 5 of the taxi operator D via a network 7a. Although a detailed description will be given later, the planning or dispatch apparatuses of these transportation operators accumulate respective pieces of operation information (planning and performance) of transportation agencies owned by the respective pieces of transportation operators and provide these pieces of information to the operation coordination apparatus 1. As will be described later, the operation coordination apparatus 1 makes proposals regarding extra departures of trains and buses, taxi dispatches, and the like, for supporting coordination of operations among transportation agencies, and more specifically, improving transportation services in the region by using these pieces of information.

Also, the operation coordination apparatus 1 is connected with a mobile apparatus 6 of a transportation user via a network 7b. The mobile apparatus 6 is, for example, a smartphone or a tablet. The operation coordination apparatus 1 proposes adjustment of the operations to the transportation operators and notifies the transportation user that the operations have been adjusted in response to acceptance of the proposal. In response thereto, the transportation user changes his or her travel behavior according to the adjusted operations by making route searches or performing other actions. Although direct notification by the operation coordination apparatus 1 to the transportation user is illustrated in this example, the operation coordination apparatus 1 may notify a navigation system operator first, after which the adjustment of the operations is notified by the navigation system in question to the transportation user. It is only necessary that information to the effect that the operations have been adjusted be eventually conveyed, directly or indirectly, to the transportation user.

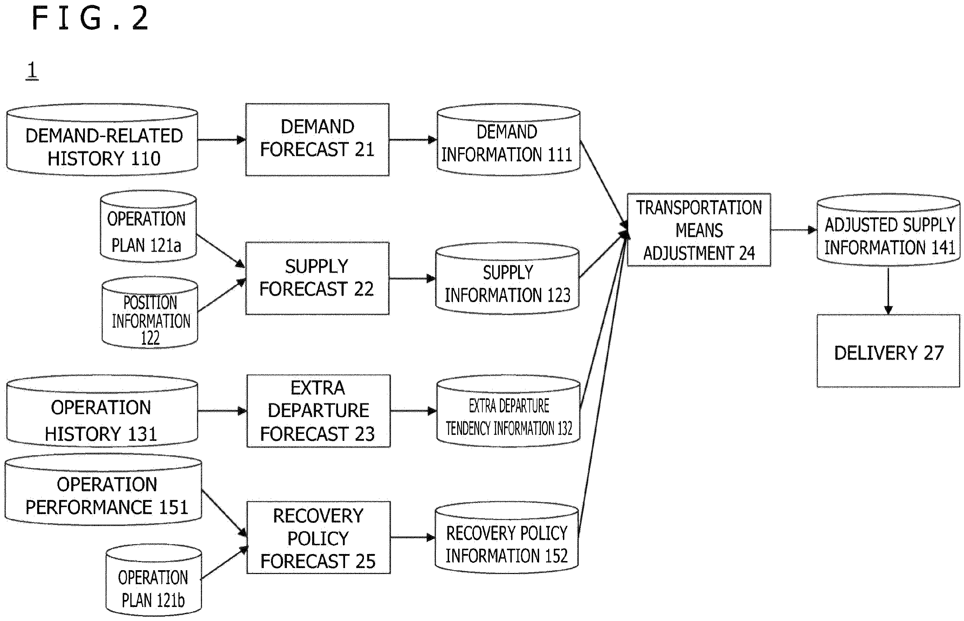

FIG. 2 illustrates a functional block diagram of the operation coordination apparatus 1. Hardware of the operation coordination apparatus is an information processing apparatus that includes a storage device such as an HDD (Hard disk drive) or an SSD (Solid State Drive). In FIG. 2, functions performed by the operation coordination apparatus 1 and input and output data for the functions thereof are represented by a functional block diagram, and each of the functions is implemented as a result of loading of a software program code into a main memory and execution of the loaded program code by a processor. Functions implemented with the program by the information processing apparatus may be referred to as "sections" in the present working example. Also, in a case where input and output data is large scale data, it is not necessary to store input and output data itself in the storage device of the operation coordination apparatus 1, and input and output data may be stored in an object storage on a cloud, and a data path for accessing target data may be stored. The operation coordination apparatus 1 may be implemented by a single server or by distributed processing servers and is not limited to a physical hardware configuration. Each of the functions included in the operation coordination apparatus 1 will be described in detail later.

### [First Working Example]

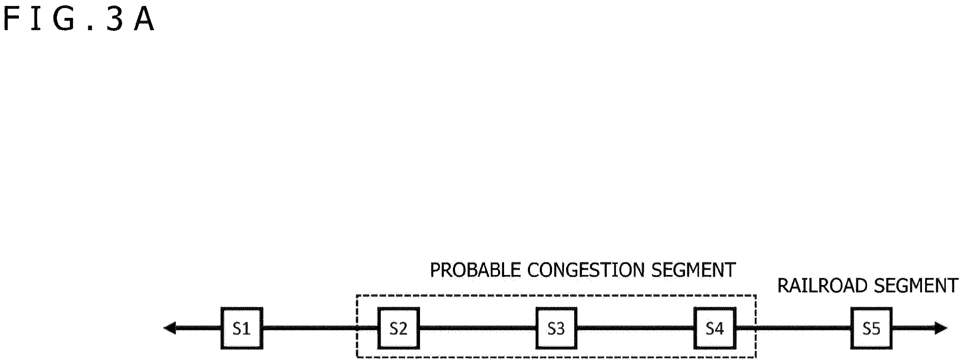

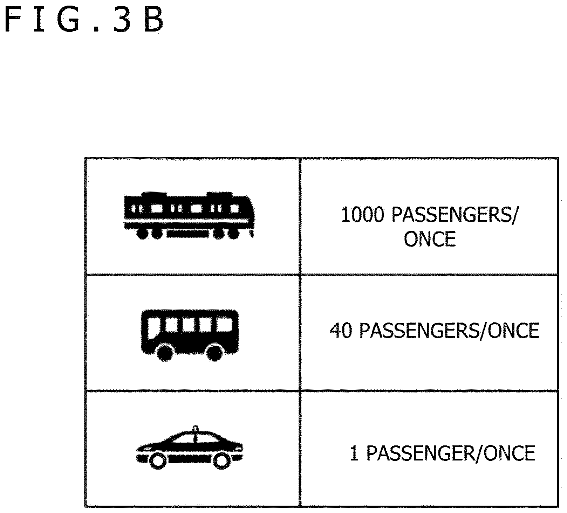

With reference to FIGS. 3A and 3B, a description will be given of an example of a traffic condition in which operations are coordinated in the first working example. In the first working example, the operation coordination apparatus 1 adjusts operations of the respective pieces of transportation operators to ease congestion that is likely to occur in some segments of a railroad line because of a sharp increase in passengers wishing to use the segments (probable congestion segment; stations S2 to S4 here), as illustrated in FIG. 3A. FIG. 3B illustrates a capacity (transportable passengers) per departure (train or vehicle) for each transportation means.

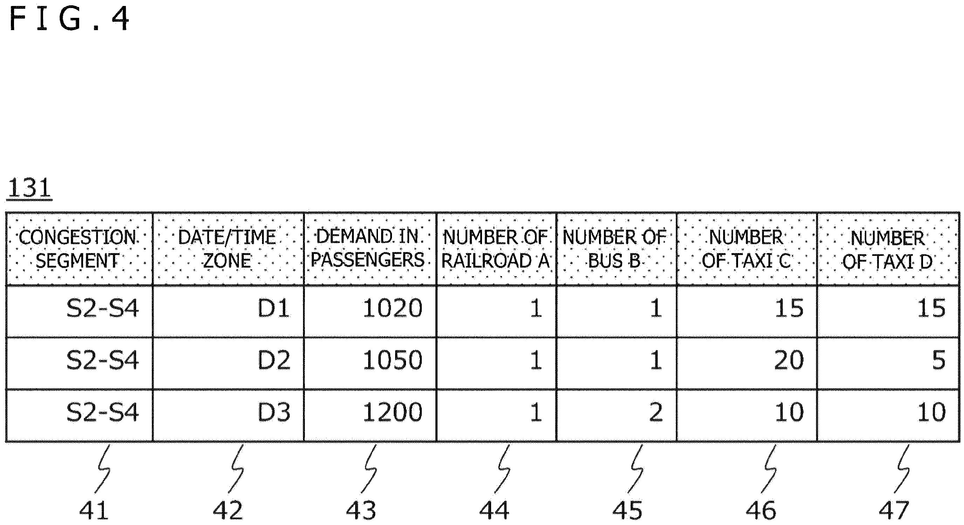

The operation coordination apparatus 1 grasps an extra departure tendency of each transportation operator from a past operation history for responding to occurrence of congestion, in advance. FIG. 4 illustrates a data structure of operation history data 131. The operation history data 131 is data that, when a time zone occurs during which demand exceeds transportation capability in a given area (area is defined by a segment of a railroad line in the present working example), keeps track of actual operation statuses (the number of departures operated and the number of dispatches) including those of transportation means in the vicinity in the time zone and segment in question. A column 41 illustrates the segments where congestion has occurred. Although an example of the segment between the stations S2 and S4 is illustrated here, all congestion segments that have occurred during a collection period of operation history data 131 are actually registered. A column 42 illustrates dates and time zones when congestion has occurred in the congestion segment in question. A column 43 illustrates demands in passengers that have occurred at the dates and times and in the congestion segments in question, and each of columns 44 to 47 illustrates departures actually operated or actual dispatches to station S2 at the dates and times and in the congestion segments in question.

An extra departure forecast section 23 of the operation coordination apparatus 1 grasps, by using this operation history data 131, an extra departure tendency for responding to congestion as information indicating the operation policy of each transportation operator against congestion. For example, it is clear from the operation history data 131 illustrated in FIG. 4 that no extra departures are added by the railroad at least for the demand in passengers from 1020 to 1200 and that although no extra departures are added by the bus for the demand in passengers from 1020 to 1050, one extra departure is added for the demand in passengers of 1200. Thus, ease of extra departures varies from one transportation operator to another. Therefore, the extra departure forecast section 23 prepares, from the operation history data 131, an extra departure tendency information table 132 that includes departures to be added to segments where congestion occurs and calculated probabilities (referred to as extra departure tendency information). It should be noted that the extra departure tendency information table 132 is desirably prepared with distinctions made for date and/or time zone even for the same segment. The reason for this is that the extra departure tendency varies depending on the date (e.g., weekday or holiday) and time zone (e.g., commuting time zone or nighttime). Also, the table may be prepared with distinctions made for the demand in passengers as appropriate.

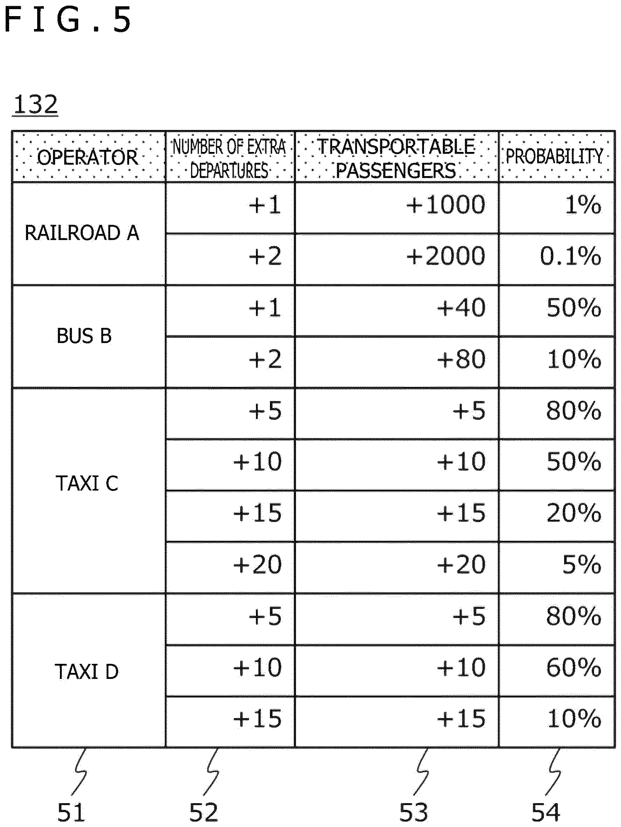

FIG. 5 illustrates a data structure of an extra departure tendency information table 132 prepared by the extra departure forecast section 23. A column 51 illustrates transportation operators, a column 52 illustrates extra departures, and a column 53 illustrates transportable passengers reinforced by extra departures. The transportable passengers are a product between extra departures and the capacity of each transportation means illustrated in FIG. 3B. A column 54 illustrates the probabilities of the respective pieces of transportation operators performing the extra departures in question. The probability is calculated on the basis of the past operation history and dispatch history recorded in the operation history data 131.

From the above, the operation coordination apparatus 1 can grasp extra departure response tendencies of the transportation operators in the region in a case where congestion occurs in part of a railroad line. It should be noted that, although an example has been described here in which the response tendencies of the transportation operators are retained as the extra departure tendency information table 132, the present invention is not limited thereto. Extra departure tendency information may be obtained by machine learning. In this case, extra departure tendency information is retained as a learning model that has an extra departure pattern of each transportation operator as a class, in place of the extra departure tendency information table 132.

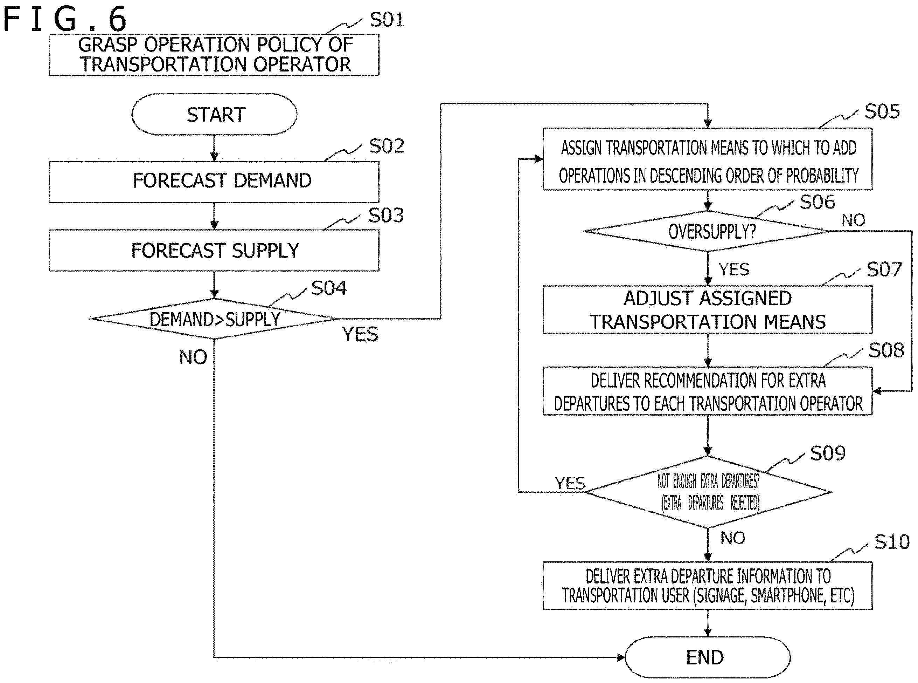

FIG. 6 illustrates an operation coordination adjustment flow performed by the operation coordination apparatus 1. Before the flow is started, an operation policy of each transportation operator is grasped (S01). In the case of the first working example, the above grasping of extra departure response tendencies of the transportation operators in the region in a case where congestion occurs in part of the railroad line corresponds to step S01. That is, the operation coordination apparatus 1 retains extra departure tendency information of each transportation operator as a table or a learning model.

First, the demand is forecast (S02). The demand is forecast by a demand forecast section 21 of the operation coordination apparatus 1. The operation coordination apparatus 1 collects travel demand that occurs in the region and accumulates the demand as demand-related history data 110. The demand forecast section 21 forecasts the travel demand that occurs in the region by using the demand-related history data 110 and stores the travel demand as demand information data 111. The forecast of the travel demand by the demand forecast section 21 can be performed by using any known techniques. For example, assuming that travel histories that occurred in the region and route search histories by the transportation users by using navigation systems in the past have been accumulated as the demand-related history data 110, it is possible to obtain the demand information data 111 by forecasting the occurrence of a travel demand at that time from the past travel histories in the same time zone on the same day of week and correcting that forecast from route search histories on that day.

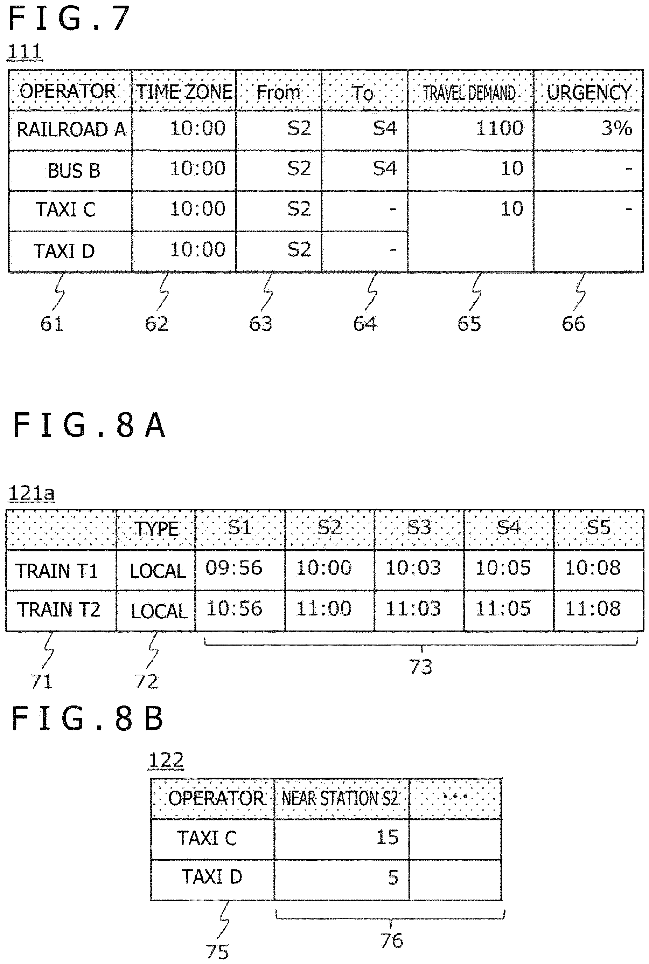

FIG. 7 illustrates a data structure of the demand information data 111. A column 61 illustrates the transportation operators, a column 62 illustrates the time zones, columns 63 and 64 illustrate target areas, a column 65 illustrates the travel demands (passengers) in the time zones and target areas in question forecast by the demand forecast section 21, and a column 66 illustrates a percentage of passengers wishing to move even if they must use a taxi among the travel demands. Due to a large difference in charge between the taxis and the railroad which is a public transportation, it is probable to presume that congestion will not switch all the railroad demand to the taxi demand. Accordingly, the urgency 66 is provided as an indicator illustrating the percentage of demand that can switch from the railroad to the taxi. Also, in the example of FIG. 7, the target areas 63 and 64 of the demand information data 111 are defined by a segment from a boarding station to an exit station in the railroad line with the railroad segments as a reference.

Next, the supply is forecast (S03). The supply is forecast by a supply forecast section 22 of the operation coordination apparatus 1. The supply forecast section 22 forecasts train and bus departures (supply amounts) and taxis (supply amount) in each time zone and stores them as supply information data 123 by using operation plan data 121a or position information data 122. The operation plan data 121a is provided from a railroad planning apparatus 2 or a bus planning apparatus 3, and the position information data 122 is provided from taxi dispatch apparatuses 4 and 5. FIG. 8A illustrates a data structure of the operation plan data 121a and illustrates a railroad operation schedule. A column 71 illustrates train names, a column 72 illustrates train types, and a column 73 illustrates scheduled arrival times at respective stations. FIG. 8B illustrates a data structure of the position information data 122 and illustrates taxi dispatch plans. A column 75 illustrates taxi operator names, and a column 76 illustrates dispatches at respective standby positions.

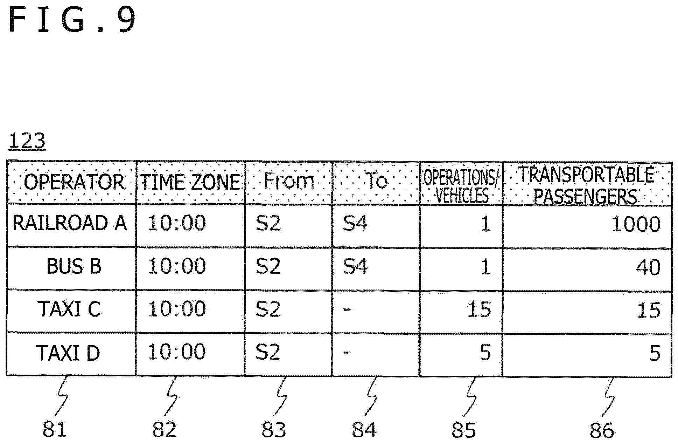

FIG. 9 illustrates a data structure of the supply information data 123 prepared by the supply forecast section 22. A column 81 illustrates transportation operator names, a column 82 illustrates time zones, columns 83 and 84 illustrate target areas, a column 85 illustrates supply amounts (departures or vehicles) in the time zones in question and target areas in question forecast by the supply forecast section 22, a column 86 illustrates passengers that can be transported by the respective pieces of transportation means in the time zones and target areas in question. The transportable passengers 86 are a product between the supply amount 85 and the capacity of each transportation means illustrated in FIG. 3B.

When the forecast of each of demand and supply ends, a transportation means adjustment section 24 compares the two (S04). In comparing the demand information illustrated in FIG. 7 and the supply information illustrated in FIG. 9, the supply exceeds the demand for the bus and taxis. Meanwhile, as for the railroad, the travel demand 65 (1100 passengers) exceeds the transportable passengers 86 (1000 passengers). Therefore, the transportation means adjustment section 24 adjusts the supply amount in such a manner as to absorb excess demand (YES in S04).

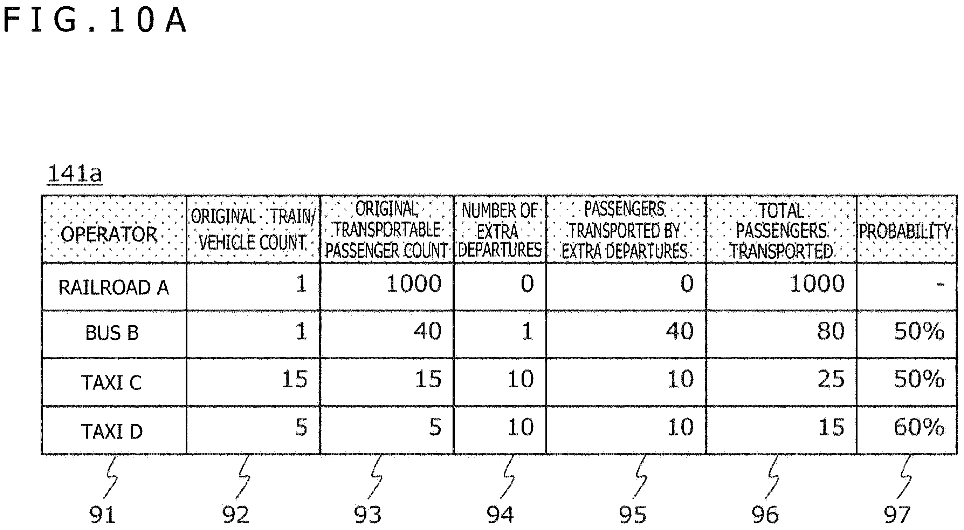

The transportation means adjustment section 24 prepares post-adjustment supply information data 141 by using the extra departure tendency information table 132 and assigning the transportation means to which to add extra departures in descending order of the probability 54 (S05). FIG. 10A illustrates a data structure of post-adjustment supply information data 141a prepared by the transportation means adjustment section 24. A column 91 illustrates transportation operators, a column 92 illustrates pre-adjustment supply amounts, a column 93 illustrates pre-adjustment passengers transported, a column 94 illustrates extra departures, a column 95 illustrates passengers transported by extra departures, a column 96 illustrates total passengers transported including those by extra departures, and a column 97 illustrates probabilities of the extra departures in question being performed. The information in the columns 92 and 93 can be obtained from the supply information data 123, and the information in the column 97 can be obtained from the extra departure tendency information table 132. As a result of the supply adjustment in FIG. 10A, total passengers transported amount to 1120 passengers, and a recommendation for extra departures is delivered to each transportation operator to meet the demand information in FIG. 7 (S08).

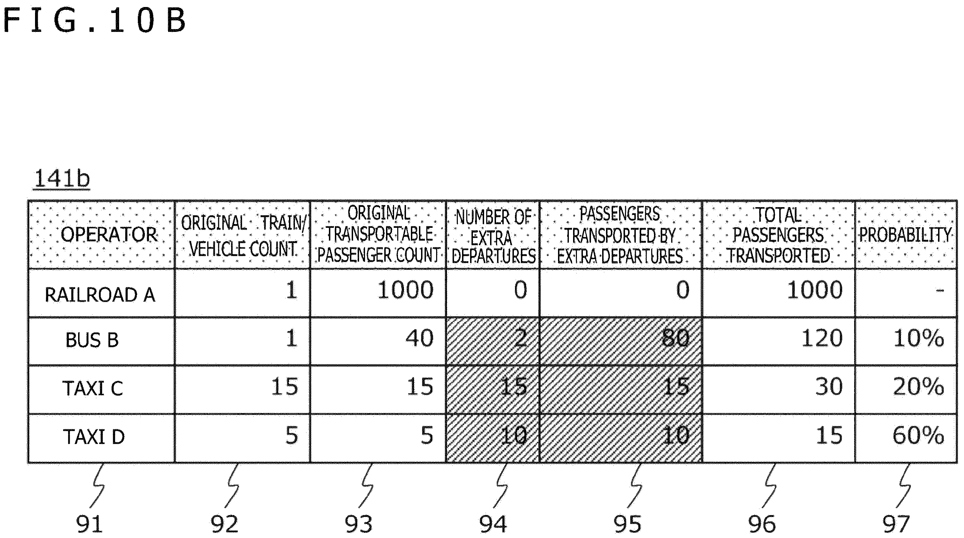

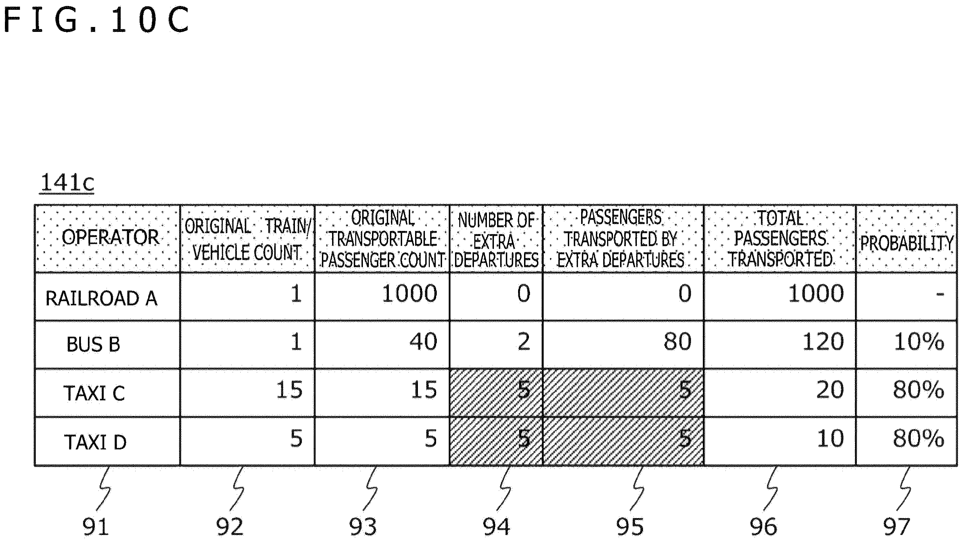

In contrast, assuming that the travel demand 65 for the railroad in the same example is, for example, 1130 passengers, the passengers transported by the supply adjustment in FIG. 10A are not sufficient. FIG. 10B illustrates an example of increasing extra departures and assigning them to the respective pieces of transportation means in such a manner as to increase passengers transported, while, at the same time, reducing the probability. In the supply adjustment in FIG. 10B, total passengers transported amount to 1165 passengers which exceed 1150 passengers necessary to be transported (it should be noted that the travel demands for the bus and taxis remain unchanged from those in FIG. 7). That is, the supply adjustment (S05) in FIG. 10B creates oversupply (YES in S06). Therefore, the extra departures of the transportation means assigned are adjusted (S07). FIG. 10C illustrates an example in which the transportation means adjustment section 24 makes adjustments. As a result of reduction of extra departures of taxis, total passengers transported amount to 1150 passengers, which indicates that the total passengers transported have been adjusted to passengers necessary to be transported. Therefore, a recommendation for extra departures is delivered to each transportation operator on the basis of post-adjustment supply information in FIG. 10C (S08).

It should be noted that the post-adjustment supply information data 141 obtained by the transportation means adjustment section 24 does not need to meet the demand information data 111 with no excess or shortage. A recommendation for extra departures is delivered as long as the supply amount is improved from the transportable passengers indicated by the pre-adjustment supply information data 123.

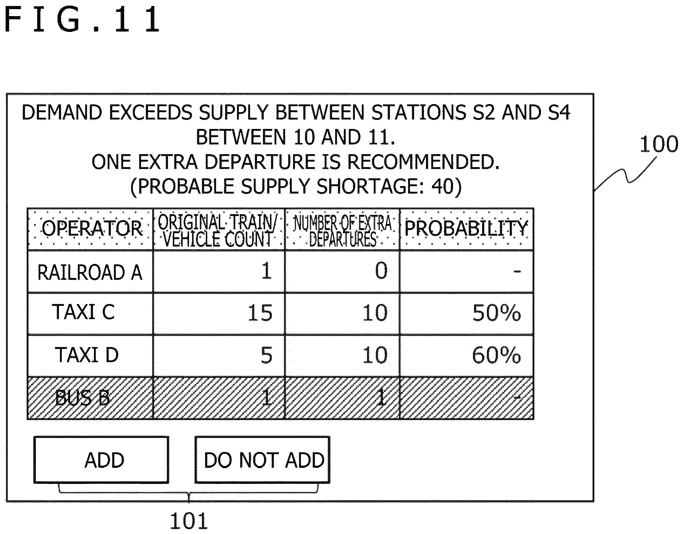

FIG. 11 illustrates an example of a recommendation for proposing operation adjustments delivered to the transportation operators by the operation coordination apparatus 1 in step S08. This recommendation is issued to all the transportation operators to which extra departures are requested, and FIG. 11 is an example of a display screen for the bus operator B. Details of the recommendation and a reason therefor are displayed for the bus operator B on a recommendation screen 100. The transportation operators reply to the operation coordination apparatus 1 about their choices of whether to accept this recommendation and adjust the operation or reject the recommendation by using ADD and DO NOT ADD buttons 101 on the recommendation screen 100. In a case where the transportation operator cannot accept the recommendation due to non-availability of trains or buses or the like (YES in S09), a reply to reject extra departures is conveyed to the transportation means adjustment section 24, and the transportation means adjustment section 24 returns to step S05 again and reassigns the transportation means to which to add extra departures. Meanwhile, in a case where the recommendation is accepted, a delivery section 27 delivers extra departure information accepted by the transportation operator (S10). It is also desirable that the transportation operators make additional departure information public to the transportation users by displaying the additional departure information on signage or the like at stations and bus stops.

### [Second Working Example]

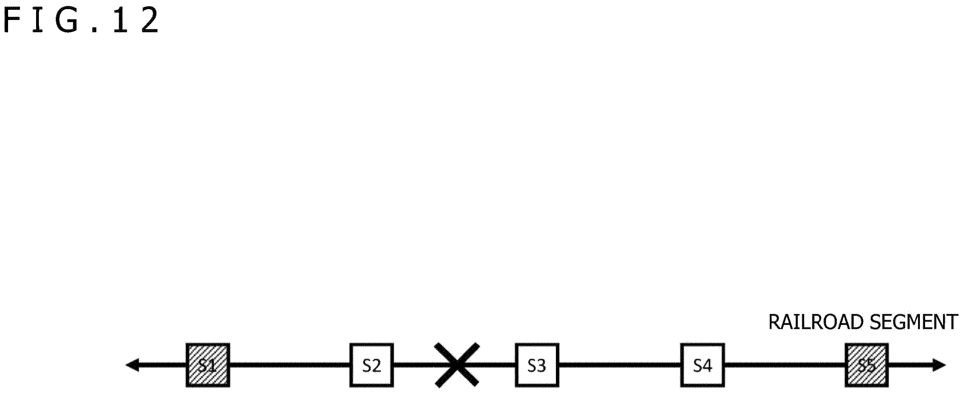

With reference to FIG. 12, a description will be given of an example of a traffic condition in which operations are coordinated in the second working example. In the second working example, it is assumed that the operation of the railroad is stopped due to occurrence of a disrupted segment between stations S2 and S3, restored back to normal, and resumed, as illustrated in FIG. 12. Therefore, the operation coordination apparatus 1 adjusts the operations of the respective pieces of transportation operators in such a manner as to ease congestion in response to resumption of operation of trains. Also, it is assumed in the second working example that express trains are also operated in the railroad segments and that the express trains stop at stations S1 and S5.

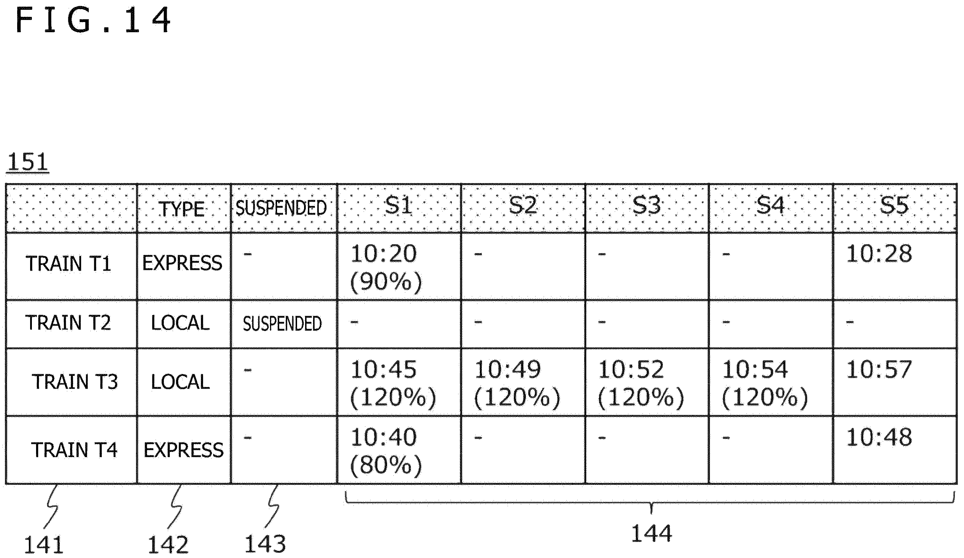

In the second working example, the operation coordination apparatus 1 grasps, in advance, a train operation recovery policy in that railroad line from the past operation performance as information indicating the operation policy of the railroad operator A for responding to the resumption of train operation at the time of restoration. FIG. 14 illustrates a data structure of operation performance data 151. The operation performance data 151 is data obtained by accumulating actual train operation schedules, occupancies, and the like. A column 141 illustrates train names, a column 142 illustrates train types, a column 143 illustrates suspensions, and a column 144 illustrates actual arrival times at respective stations and occupancies from the previous stopping station to the station in question (numbers in brackets).

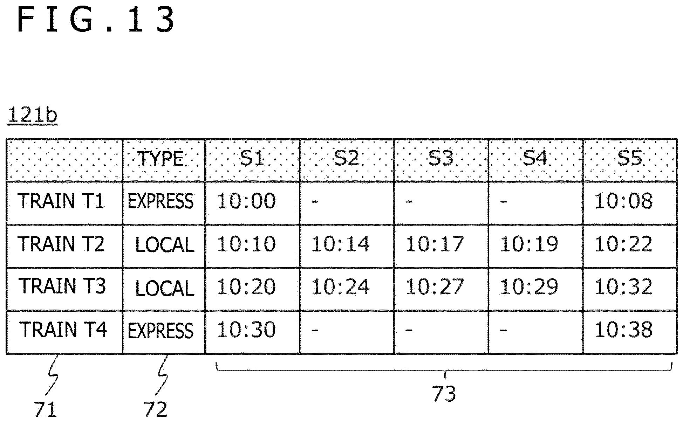

FIG. 13 illustrates operation plan data 121b during a time period corresponding to the operation performance data 151 in FIG. 14. A recovery policy estimation section 25 estimates the train operation recovery policy of the train operator A at the time of restoration by comparing the operation performance data 151 and the operation plan data 121b. For example, various policies are possible including giving priority to recovering superior trains for which refund is needed or giving priority to solving congestion resulting from disruption. Therefore, the recovery policy estimation section 25 prepares a recovery policy information table 152 on the basis of the operation performance data 151 at the times of recoveries from restorations in the past.

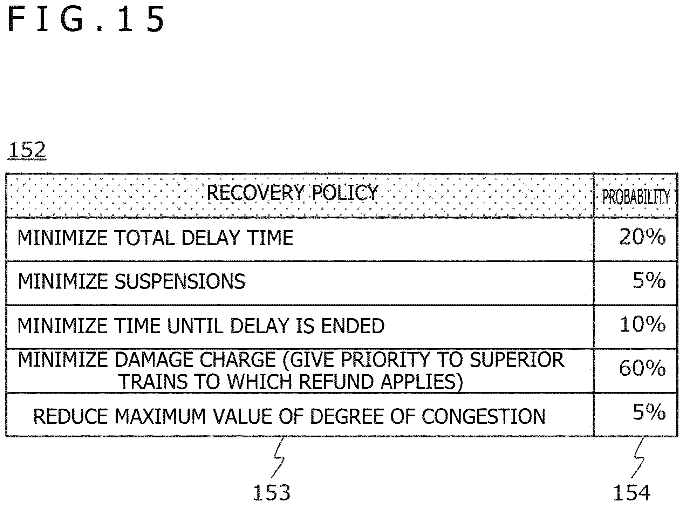

FIG. 15 illustrates a data structure of the recovery policy information table 152 prepared by the recovery policy estimation section 25. A column 153 illustrates recovery policies, and a column 154 illustrates probabilities of the recovery policies in question being adopted by the railroad operator A. The probabilities are calculated by extracting delay times, congestion conditions (occupancies), times needed to end delays, and the like at the times of recoveries in the past recorded in the operation performance data 151 and on the basis of these feature quantities and the operation schedules actually adopted at the times of operation recoveries.

From the above, the operation coordination apparatus 1 can estimate the train operation recovery policy of the train operator A in the case of restoration of the railroad line. It should be noted that, although an example has been described here in which the response tendencies of the transportation operators are retained as the recovery policy information table 152, the present invention is not limited thereto. Recovery policy information may be obtained by machine learning. In this case, recovery policy information is retained as a learning model that has the recovery policy of the railroad operator A as a class, in place of the recovery policy information table 152.

Because the operation coordination adjustment flow performed by the operation coordination apparatus 1 is as illustrated in FIG. 6, the details that overlap the first working example are omitted, and the details specific to second working example will be described here. Before the flow is started, the operation policy of each transportation operator is grasped (S01). In the case of the second working example, the above estimation of the recovery policy in the case of restoration of the railroad line is added to step S01. That is, in the second working example, the operation coordination apparatus 1 retains recovery policy information of the railroad operator A as a table or a learning model.

In the supply forecast in step S03, the supply forecast section 22 forecasts the supply amount on the basis of not the operation plan data 121b itself, but the estimated operation schedule at the time of restoration. That is, the supply forecast section 22 estimates the recovery policy that is likely to be adopted by the railroad operator A from the operation plan data 121b, the demand information data 111, and the recovery policy information table 152 and estimates the operation schedule at the time of restoration based on the recovery policy. A process of forecasting the supply amount for the operation schedule at the time of restoration is similar to that in the case of the first working example.

Also, subsequent processes are similar to those of the first working example, and therefore, the description thereof will be omitted.

The present invention has been described above on the basis of the two working examples. The present invention is not limited to the description of the working examples and can be modified in various manners. For example, although the description has been given mainly by taking a railroad line as an example, the same is true for a bus, and the present invention is applicable to any types of transportation means in general that operate predetermined lines according to given schedules.

### Reference Signs List

1: Operation coordination apparatus
2: Railroad planning apparatus
3: Bus planning apparatus
4, 5: Taxi dispatch apparatus
6: Mobile apparatus
7: Network
21: Demand forecast section
22: Supply forecast section
23: Extra departure forecast section
24: Transportation means adjustment section
25: Recovery policy estimation section
27: Delivery section
100: Recommendation screen
101: ADD and DO NOT ADD buttons
110: Demand-related history data
111: Demand information data
121: Operation plan data
122: Position information data
123: Supply information data
131: Operation history data
132: Extra departure tendency information table
141: Post-adjustment supply information data
151: Operation performance data
152: Recovery policy information table

## Claims

1. An operation coordination apparatus for supporting, in a region where a plurality of transportation operators including a first transportation operator provide different pieces of transportation means, coordination of operations among the respective pieces of transportation means provided by the plurality of transportation operators, the operation coordination apparatus comprising:
an operation policy estimation section adapted to estimate, for each of the plurality of transportation operators, an operation policy thereof on a basis of operation history information of the transportation means provided by each of the transportation operators; and
a transportation means adjustment section adapted to adjust, when it is forecast that a first travel demand that uses the transportation means of the first transportation operator will exceed first transportable passengers of the transportation means of the first transportation operator, operations of the respective pieces of transportation means of the plurality of transportation operators in such a manner as to absorb the first travel demand that exceeds the first transportable passengers on a basis of the operation policy estimated for each of the plurality of transportation operators and propose the adjusted operations of the respective pieces of transportation means to the transportation operators.

2. The operation coordination apparatus according to claim 1, wherein
the transportation means adjustment section readjusts, when the proposed operations of the transportation means are not accepted by the transportation operators, the operations of the respective pieces of transportation means of the plurality of transportation operators on the basis of the operation policy estimated for each of the plurality of transportation operators and proposes the readjusted operations of the respective pieces of transportation means to the transportation operators in question.

3. The operation coordination apparatus according to claim 1, further comprising:
a delivery section adapted to deliver, when the proposed operations of the respective pieces of transportation means are accepted by the transportation operators in question, the accepted operations of the respective pieces of transportation means to transportation users.

4. The operation coordination apparatus according to claim 1, wherein
the operation policies of the transportation operators estimated by the operation policy estimation section are extra departure tendencies for responding to occurrence of congestion.

5. The operation coordination apparatus according to claim 4, wherein
the operation policy estimation section generates, from operation history data including areas where congestion has occurred in the region, dates and times when the congestion has occurred, demands in passengers at a time of the congestion, and operation information of the respective pieces of transportation means of the plurality of transportation operators in the areas in question and on the dates and times in question, extra departure tendency information indicating an extra departure tendency of each of the plurality of transportation operators for responding to congestion.

6. The operation coordination apparatus according to claim 5, wherein
the transportation means of the first transportation operator is transportation means that operates a predetermined line according to a predetermined schedule, and
the area is defined by segments of the line.

7. The operation coordination apparatus according to claim 5, wherein
the extra departure tendency information is retained as an extra departure tendency information table indicating extra departures and a probability thereof for each of the plurality of transportation operators or a learning model that has an extra departure pattern of each of the plurality of transportation operators as a class.

8. The operation coordination apparatus according to claim 1, wherein
the transportation means of the first transportation operator is transportation means that operates a predetermined line according to a predetermined schedule, and
the operation policy of the transportation operator estimated by the operation policy estimation section includes an operation recovery policy at a time of resumption of operation by the first transportation operator.

9. The operation coordination apparatus according to claim 8, wherein
the operation policy estimation section generates operation recovery policy information at a time of resumption of operation by the first transportation operator on the basis of operation performance data including at least an operation schedule and occupancy at a time of restoration of the line by the first transportation operator and operation schedule data during a time period corresponding to the operation performance data.

10. The operation coordination apparatus according to claim 9, wherein
the recovery policy information is retained as a recovery policy information table indicating a recovery policy adopted by the first transportation operator and a probability thereof or a learning model that has the recovery policy of the first transportation operator as a class.

11. The operation coordination apparatus according to claim 9, comprising:
a supply forecast section adapted to forecast transportable passengers of each transportation means of the plurality of transportation operators, wherein
the supply forecast section estimates, at a time of restoration of the line, the operation at a time of resumption of operation by the first transportation operator on a basis of the recovery policy information and forecasts transportable passengers of the transportation means of the first transportation operator on a basis of the estimated operation.

12. An operation coordination support method for supporting, in a region where a plurality of transportation operators including a first transportation operator provide different pieces of transportation means, coordination of operations among the respective pieces of transportation means provided by the plurality of transportation operators by using an operation coordination apparatus, the operation coordination apparatus including an operation policy estimation section and a transportation means adjustment section, the operation coordination support method comprising:
estimating, by the operation policy estimation section, for each of the plurality of transportation operators, an operation policy thereof on a basis of operation history information of the transportation means provided by each of the transportation operators; and
adjusting, by the transportation means adjustment section, when it is forecast that a first travel demand that uses the transportation means of the first transportation operator will exceed first transportable passengers of the transportation means of the first transportation operator, operations of the respective pieces of transportation means of the plurality of transportation operators in such a manner as to absorb the first travel demand that exceeds the first transportable passengers on a basis of the operation policy estimated for each of the plurality of transportation operators and proposing the adjusted operations of the respective pieces of transportation means to the transportation operators.

13. The operation coordination support method, according to claim 12, wherein
the operation policies of the transportation operators estimated by the operation policy estimation section are extra departure tendencies for responding to occurrence of congestion.

14. The operation coordination support method, according to claim 12, wherein
the transportation means of the first transportation operator is transportation means that operates a predetermined line according to a predetermined schedule, and
the operation policy estimation section estimates an operation recovery policy at a time of resumption of operation by the first transportation operator.
